# EUROPÄISCHE PATENTANMELDUNG

(11) **EP 1 128 304 A2**
(43) Veröffentlichungstag der Anmeldung: **29.08.2001**
(21) Anmeldenummer: 01250008.8
(22) Anmeldetag: 08.01.2001
(51) Int. Cl.: G06F 17/60

(54) **Abgleichverfahren für Arbeitsgruppeninformationen**

(30) Priorität: 24.02.2000 DE 10009837
(71) Anmelder: MANNESMANN Aktiengesellschaft, 40213 Düsseldorf (DE)
(72) Erfinder: Schröter, Andreas, Dipl.-Ing., 40670 Meerbusch (DE)
(74) Vertreter: Meissner, Peter E., Dipl.-Ing.

(57) **Zusammenfassung**

Ein sehr einfacher, ergonomischer und dabei zuverlässiger Abgleich von Informationen mit mobilen Endgerät-Nutzern wird ermöglicht durch ein Verfahren zum Abgleich von für eine Gruppe von Endgerät-Nutzern mit Endgeräten (2, 4, 5) relevanten Informationen (7) über mindestens ein Telekommunikationsnetz (3) oder Netzwerk (1), wobei der Abgleich mit mindestens einem mobilen Endgerät (4) über ein Mobilfunk-Telekommunikationsnetz (3) erfolgt.

## Beschreibung

Die Erfindung betrifft ein Verfahren zum Abgleich von für eine Gruppe von Endgeräte-Nutzern mit Endgeräten relevanten Informationen.

Dem Fachmann sind unterschiedliche Groupware-Anwendungen (Lotus Notes, Groupwise, Time System) für PC-Netzwerke bekannt. Ferner ist die Format-Konvertierung und Übertragung eines PC-Terminkalenders auf Organizer bekannt.

Das Problem bekannter mobiler Endgeräte, wie Organizer, ist, daß auf sie von einem PC übertragene Terminkalender, Projektpläne, Adreßdaten etc. nur im Augenblick der Übertragung aktuell sind und daß Änderungen mit dem mobilen Nutzer des mobilen Endgerätes nur umständlich per Telefon oder E-Mail abgestimmt werden können, wobei eine Konsistenz der Daten in Endgeräten mehrerer Mitarbeiter nicht zuverlässig gewährleistet ist.

Aufgabe der vorliegenden Erfindung ist deshalb das Ermöglichen eines einfachen, effizienten und zuverlässigen Abgleichs von für eine Gruppe von Endgerät-Nutzern relevanten Informationen auch mit mobilen Endgeräten. Die Aufgabe wird durch die Gegenstände der unabhängigen Ansprüche gelöst.

Ein automatisierter Abgleich der Informationen über ein Mobilfunk-Telekommunikationsnetz mit mobilen Endgeräten (= Mobilfunkendgeräten) gewährt in ergonomischer und unaufwendiger Weise einen sehr zuverlässigen und konsistenten Abgleich von für eine Gruppe von Endgerät-Nutzern relevanten Informationen. Die Steuerung des Abgleiches, insbesondere das Verschicken von Datentelegrammen hinsichtlich der Informationen an betroffene Endgeräte sowie die Überwachung des Rücklaufs von Bestätigungen oder Absagen hinsichtlich der übertragenen Informationen von den Endgeräten kann entweder in den Endgeräten, insbesondere in einem eine relevante Information abgebenden Endgerät oder in einer Datenverarbeitungseinrichtung gesteuert werden. Eine Datenverarbeitungseinrichtung kann insbesondere ein stationärer Computer sein, der Tabellen von Netzwerkadressen und/oder Telefonnummern (insbesondere Mobilfunktelefonnummern) von Endgeräten gespeichert hat; die von einem Endgerät an eine Datenverarbeitungseinrichtung zur Weitersendung an andere Endgeräte übertragenen für eine Gruppe von Endgeräten relevanten Informationen werden aufgrund der zu den weiterzugebenden Informationen angegebenen Endgeräten (oder Endgeräten zugeordneten Endgerät-Nutzern) somit von der Datenverarbeitungseinrichtung an aufgrund ihrer Tabellen identifizierbare Netzwerkadressen und/oder Telefonnummern weitergesandt. Vorzugsweise sind die Informationen an Endgeräte weitersendende Datenverarbeitungseinrichtungen und die Netzwerkadressen und/oder Telefonnummern speichernde Datenverarbeitungseinrichtung räumlich integriert ausgebildet.

Die Übersendung von Informationen an mobile Endgeräte erfolgt zweckmäßig kostengünstig als Kurznachricht point-to-point (wie GSM-SMS-PTP oder UMTS).

Vorzugsweise werden an ein Mobilfunkendgerät nicht zustellbare Informationen gespeichert, bis sie zustellbar sind, um auch bei Funklöchern etc. einen möglichst zuverlässigen Abgleich zu gewährleisten.

Um das Verfahren möglichst universell mit Endgeräten mit unterschiedlichsten Format-Vorgaben für von ihnen verarbeitbare Informationen gestalten zu können, werden zweckmäßig von einer Datenverarbeitungseinrichtung (oder alternativ einem Informationen aussendenden Endgerät) an weitere Endgeräte weiterzuleitende Informationen hinsichtlich des Formates so strukturiert, daß sie von den anderen Endgeräten weiterverarbeitet werden können.

Das Verfahren eignet sich insbesondere für Informationen in Form von Terminvorschlägen, welche von einem Endgerät-Nutzer über sein Endgerät an mehrere vom Terminvorschlag betroffene andere Endgerät-Nutzer über deren Endgeräte weiterzuleiten sind. Hierbei kann sehr effizient eine Terminbestätigung und/oder Absage und/oder ein Time-Out überwacht werden.

Weitere Merkmale und Vorteile ergeben sich aus den Patentansprüchen und der nachfolgenden Beschreibung eines Ausführungsbeispiels anhand der Zeichnung. Dabei zeigt
- Fig. 1: für einen erfindungsgemäßen Abgleich von Informationen geeignete Endgeräte und eine Datenverarbeitungszentrale,
- Fig. 2: schematisch den Ablauf bei der Übertragung von einen Terminvorschlag enthaltenden Informationen und
- Fig. 3: als Blockschaltbild Systemkomponenten eines erfindungsgemäßen Systems.

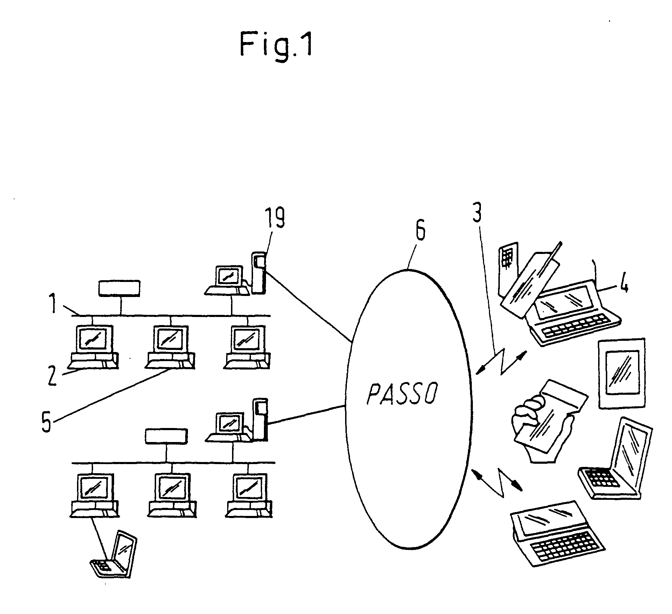

Figur 1 zeigt zum erfindungsgemäßen Abgleichen von Informationen geeignete Endgeräte in Form von an ein Netzwerk 1 angeschlossenen herkömmlichen PCs 2, 5 und für eine Mobilfunkübertragung 3 geeigneten mobilen Endgeräten (wie dem Nokia Communicator) 4. Der Abgleich der für mehrere Endgeräte 2, 4, 5 relevanten Informationen erfolgt durch Austausch der Informationen zwischen den Endgeräten 2, 5 über ein Netzwerk, während der Abgleich zwischen den Endgeräten 2 und/oder 5 und dem mobilen Endgerät 4 über das Netzwerk 1, eine Datenverarbeitungseinrichtung 6 und ein Mobilfunk-Telekommunikationsnetz 3 erfolgt.

Diejenigen Endgerät-Nutzer (also deren Namen) und/oder diejenigen Endgeräte von Endgerät-Nutzern (also Telefonnummern etc.), für welche Informationen relevant sind, legt der Nutzer eines Endgerätes 2 entweder dadurch fest, daß er eine Gruppe definiert, für welche bestimmte Informationen relevant sind und bei der Weitergabe (an eine Datenverarbeitungseinrichtung 19 oder 6 oder andere Mobilfunkendgeräte) in sein Endgerät eingibt, für welche Gruppe die Informationen relevant sind. Alternativ ist es möglich, die Endgeräte bzw. Endgerät-Nutzer, für welche Informationen relevant sind, einzeln an einem Endgerät einzugeben. Die Übertragung von durch einen Endgerät-Nutzer an seinem Endgerät 2 als für bestimmte Endgerät-Nutzer und/oder Endgeräte 5, 4 relevant definierten Informationen erfolgt hier über eine Datenverarbeitungseinrichtung 6. Die Datenverarbeitungseinrichtung 6 übernimmt die Weiterleitung der Informationen an weitere Endgeräte. Die Weiterleitung kann über Netzwerke 1 und/oder Festnetze und/oder Mobilfunk-Telekommunikationsnetze 3 erfolgen.

Diejenigen Endgerät-Nutzer, für welche die Informationen relevant sind, können durch einen ihnen zugeordneten Endgerät-Nutzernamen definiert sein, worauf die Datenverarbeitungseinrichtung 19 und/oder 6 aufgrund von in ihr vorhandenen oder von ihr zugreifbaren Tabellen die Netzwerkadressen und/oder Festnetznummern und/oder Mobilfunknummern der Endgeräte dieser weiteren Endgerät-Nutzer heraussucht und die Informationen an diese Endgeräte weiterleitet. Alternativ können bereits mit den Informationen von einem sie aussendenden Endgerät die Adressen der Endgeräte, für welche die Informationen relevant sind, explizit angegeben sein. Die Datenverarbeitungseinrichtung 6 überwacht den Zugang der Informationen bei Endgeräten (beispielsweise über eine SMS-Quittung bei GSM oder UMTS). Ferner kann die Datenverarbeitungseinrichtung überwachen, ob auch eine Antwort eingeht und diese an den Absender der Informationen oder an alle Endgeräte, für welche die Information als relevant definiert wurden, weiterleiten. Die Datenverarbeitungseinrichtung 6 kann auch einen Time-Out für den Rücklauf einer Zugangsbestätigung betreffend die Informationen von einem Endgerät und/oder für eine Antwort des Endgerät-Nutzers auf ihm zugegangene Informationen überwachen.

Die Erfindung ist besonders geeignet, um Informationen in Form von Terminvorschlägen an weitere Endgerät-Nutzer, die von den Terminvorschlägen betroffen sind zu übermitteln und eine Bestätigung oder Nichtbestätigung zu überwachen.

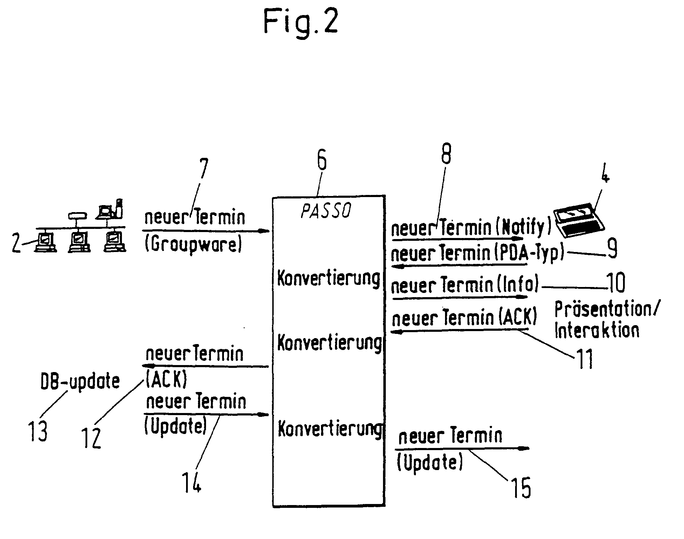

Figur 2 verdeutlicht den erfindungsgemäßen Informationsabgleich in Form einer Terminabstimmung. Das Endgerät 2 gibt an eine Datenverarbeitungseinrichtung 6 einen Terminvorschlag 7 mit mindestens einer Adresse oder Bezeichnung eines Endgerätes 4 (hier: Mobilfunkendgerät in Form eines Nokia Communicators), für dessen Endgerät-Nutzer der Terminvorschlag relevant ist, also mit welchem der Termin abzustimmen ist. Die Datenverarbeitungseinrichtung 6 leitet den Terminvorschlag (hier als Mobilfunk-Kurznachricht SMS-PTP-MT) 8, an das mindestens eine im Terminvorschlag 7 als Telefonnummer oder Name angegebene Endgerät 4 weiter. Das Endgerät 4 bestätigt über ein Mobilfunknetz (3 in Figur 1) den Eingang der Terminbenachrichtigung 8 durch eine (beispielsweise in GSM oder UMTS standardisiert vorgegebene) Quittung 9. Dabei betreffen die Nachrichten 8 und 9 nur das Vorliegen eines neuen Termins; hingegen enthalten die Nachrichten 10 und 11 Daten betreffend den konkreten Termin. In der Nachricht 10 wird von der Datenverarbeitungseinrichtung 6 an das Endgerät 4 ein neuer Termin als Kurznachricht etc. übermittelt und die Terminbestätigung durch den Endgerät-Nutzer am Endgerät 4 durch eine Nachricht 11 an die Datenverarbeitungseinrichtung 6 übermittelt. Die Aufteilung der übertragenen Nachrichten in eine Nachricht betreffend das Vorliegen eines Termins und den konkreten Termin hat den Vorteil, daß der Endgerät-Nutzer mit der Bestätigung der Nachricht betreffend das Vorliegen eines Termins zu erkennen gibt, daß er für den Terminvorschlag erreichbar war, während er durch die konkrete Bestätigung 11 des Termins sein Einverständnis mit dem Termin gibt. Die Bestätigung 11 betreffend den Termin wird an das Endgerät 2 als Nachricht 12 (über ein Netzwerk und/oder ein Telekommunikationsnetz) weitergeleitet. Darauf erfolgt ein Datenbank-Update 13 im Endgerät 2, also eine Aktualisierung von bestätigten Terminen in einem elektronischen Terminkalender im Endgerät 2. Darauf wird noch der Eingang der Terminbestätigung 12 im Endgerät 2 durch eine weitere Bestätigung 14 bestätigt, welche von der Datenverarbeitungseinrichtung 6 als Telegramm 15 (Kurznachricht etc.) an das Endgerät 4 übermittelt wird, worauf dort spätestens ebenfalls ein Datenbank-Update der Termin-Datenbank im Endgerät 4 erfolgt. Darauf ist in den Endgeräten 2 und 4 der Termin als bestätigter Termin gespeichert. Vorteilhaft ist dies insbesondere bei mehr als zwei Endgeräten, da der Abgleich und die Überwachung der Bestätigung und die Weiterleitung von Bestätigungen sowie die Speicherung von bestätigten Terminen als bestätigt automatisch erfolgt.

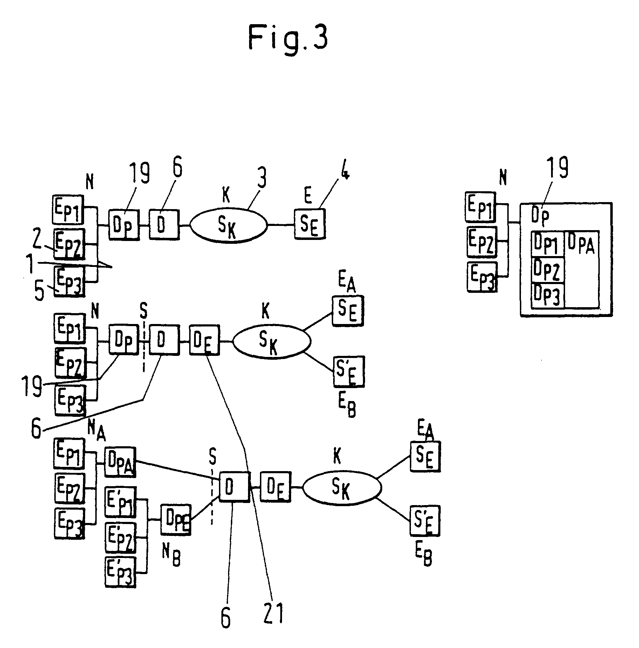

Figur 3 zeigt für mehrere Aufbauvarianten von Datenverarbeitungseinrichtungen jeweils als Blockschaltbild Elemente eines erfindungsgemäßen Systems. Gemäß Figur 3, links oben, sind mehrere Endgeräte 2,5 verbunden über eine Datenverarbeitungseinrichtung 19 (welche Terminpläne, Listen mit Arbeitspaketen und Adressen etc. für die Endgeräte 2,5 verwaltet und beispielsweise ein Server in einem Netzwerk mit den Endgeräten 2, 5 sein kann). Von der Datenverarbeitungseinrichtung 19 können Informationen zwischen den Endgeräten 2, 5 abgeglichen werden. Ein Abgleich mit einem Mobilfunkendgerät 4 oder dgl. erfolgt über eine weitere Datenverarbeitungseinrichtung 6 und ein Kommunikationsnetz (Mobilfunk-Telekommunikationsnetz) 3. Die Datenverarbeitungseinrichtung 6 übernimmt dabei die Weiterleitung von Informationen an ein mobiles Endgerät 4 über ein Mobilfunk-Telekommunikationsnetz 3. In einem Mobilfunk-Telekommunikationsnetz 3 können Speicher (S_{E}) für im Endgerät 4 nicht zustellbare Informationen (und deren spätere Sendung) vorgesehen sein. Ein Speicher Se im Endgerät 4 ermöglicht hingegen die Speicherung von Informationen, Telegrammen, Bestätigungen etc., welche (aufgrund eines Mobilfunkloches etc.) vom Endgerät 4 aktuell noch nicht an ein Kommunikationsnetz gesendet werden können.

Auch kann gemäß Figur 3, links Mitte, eine weitere Datenverarbeitungseinrichtung 21 vorgesehen sein, welche von Endgeräten übersandte Informationen im Format konvertiert, um ihre Weiterverarbeitung durch Endgeräte, an welche sie weitergeleitet werden, zu ermöglichen. Die verschiedene Teilaufgaben übernehmenden Datenverarbeitungseinrichtungen können räumlich separiert oder integriert ausgebildet sein, wie die in Figur 3 dargestellten Beispiele zeigen.

## Patentansprüche

1. Verfahren zum Abgleich von für eine Gruppe von Endgerät-Nutzern mit Endgeräten (, 2, 4, 5) relevanten Informationen (7) über mindestens ein Telekommunikationsnetz (3) oder Netzwerk (1),
wobei der Abgleich mit mindestens einem mobilen Endgerät (4) über ein Mobilfunk-Telekommunikationsnetz (3) erfolgt.

2. Verfahren nach Anspruch 1,
dadurch gekennzeichnet,
daß der Abgleich von einer mit den Endgeräten (2,4,5) über ein Netzwerk (1) und/oder ein Telekommunikationsnetz (3) verbindbaren Datenverarbeitungseinrichtung (6) gesteuert wird.

3. Verfahren nach Anspruch 2,
dadurch gekennzeichnet,
daß eine Übermittlung der Informationen, die ein Server eines Netzwerkes (1) erfolgt.

4. Verfahren nach einem der vorhergehenden Ansprüche,
dadurch gekennzeichnet,
daß eine mit den Endgeräten über ein Netzwerk und/oder Telekommunikationsnetz verbindbare Datenverarbeitungseinrichtung (6; 19) Netzwerksadressen und/oder Telefonnummern, insbesondere MobilfunkTelefonnummern, von Endgeräten (2,4,5) speichert und zu deren Adressierung bei der Informations-Weiterleitung verwendet.

5. Verfahren nach Anspruch 4,
dadurch gekennzeichnet,
daß die Datenverarbeitungseinrichtung, welche Adressen speichert und die Datenverarbeitungseinrichtung, welche Informationen weiterleitet, räumlich integriert angeordnet sind.

6. Verfahren nach einem der vorhergehenden Ansprüche,
dadurch gekennzeichnet,
daß eine mit den Endgeräten über ein Netzwerk (1) und/oder Telekommunikationsnetzwerk (3) verbindbare Datenverarbeitungseinrichtung (6) an Endgeräte für sie bzw. ihre Nutzer relevante Informationen (7) als Kurznachricht sendet.

7. Verfahren nach Anspruch 6,
dadurch gekennzeichnet,
daß die Datenverarbeitungseinrichtung an mindestens ein mobiles Endgerät (4) Informationen (7) über einen Mobilfunk-Kurznachrichtenkanal (3) point-to-point sendet.

8. Verfahren nach einem der vorhergehenden Ansprüche,
dadurch gekennzeichnet,
daß eine Datenverarbeitungseinrichtung (6) an ein Mobilfunkendgerät (4) nicht zustellbare Informationen speichert und erneut sendet, bis sie zustellbar sind.

9. Verfahren nach einem der vorhergehenden Ansprüche,
dadurch gekennzeichnet,
daß eine Datenverarbeitungseinrichtung (6) von einem Endgerät (2) erhaltene Informationen (7) vor der Weiterleitung (10) an ein anderes Endgerät (4) in ein für das andere Endgerät (4) verständliches vorgegebenes Format umstrukturiert.

10. Verfahren nach einem der vorhergehenden Ansprüche,
dadurch gekennzeichnet,
dass das Endgerät (4) der Datenverarbeitungseinrichtung (6) nach einem Hinweis (8) mitteilt (9), in welchem Format die Daten (10, 15) übertragen werden sollen.

11. Verfahren nach einem der vorhergehenden Ansprüche,
dadurch gekennzeichnet,
daß die Informationen Notizen oder Listen zu erledigender Arbeiten oder Adressen oder Terminvorschläge sind.

12. Verfahren nach einem der Ansprüche 1 bis 11,
dadurch gekennzeichnet,
daß die Informationen Terminvorschläge sind, welche von einem Endgerät (2) für andere Endgeräte (4,5) ausgesendet werden, deren Nutzer sie betreffen, und gelöscht werden, wenn sie von den anderen Endgeräten (4,5) nicht oder nicht in einer vorgegebenen Zeit positiv durch eine Bestätigung (11) beantwortet werden, während sie bei Bestätigung (11) durch die anderen Endgeräte (4,5) als bestätigte Termine im Endgerät (2,4,5) abgespeichert (2; 6) werden.

13. Verfahren nach einem der vorhergehenden Ansprüche,
dadurch gekennzeichnet,
daß ein Endgerät eine Datenverarbeitungseinrichtung (6) durch eine Nachricht veranlassen kann, für einen vorgegebenen Zeitraum an das Endgerät keine Informationen zu senden, sondern diese zu speichern und daß nach Ablauf des Zeitraumes ein automatischer Abgleich zwischen der Datenverarbeitungseinrichtung (6) und dem Endgerät (4) erfolgt.

14. Datenverarbeitungseinrichtung zur Durchführung des Verfahrens nach einem der vorhergehenden Ansprüche.

15. Datenverarbeitungseinrichtung (19;6), insbesondere nach Anspruch 14,
- mit einer Empfangseinrichtung zum Empfang von Nachrichten (7,9,11,14) aus einem Netzwerk (1) und/oder aus einem Telekommunikationsnetz (3),
- mit einer Sendeeinrichtung zum Senden von Informationen (8,10,15) über ein Netzwerk (1) und/oder ein Telekommunikationsnetz (3),
- mit einer Steuerung, welche so ausgebildet ist, daß sie der Datenverarbeitungseinrichtung von einem Endgerät zugehende, für andere Endgeräte relevante Informationen (7,14) an Endgeräte (4,5) weiterleitet, welche bei der Übermittlung von Informationen vom Endgerät (2) an die Datenverarbeitungseinrichtung (6) als relevant definiert werden,
wobei mindestens eine Mobilfunk-Sende- und Empfangseinrichtung oder Leitung zu dieser vorgesehen ist.
